# EUROPEAN PATENT APPLICATION

(11) **EP 4 178 319 A1**
(43) Date of publication of application: **10.05.2023**
(21) Application number: 22205571.7
(22) Date of filing: 04.11.2022
(51) Int. Cl.: H05B 45/50

(54) **CONTROL PROTECTION CIRCUIT**

(30) Priority: 05.11.2021 CN 202111306922
(71) Applicant: Self Electronics Co., Ltd., Ningbo City, Zhejiang 315103 (CN); SELF ELECTRONICS Germany GmbH, 51149 Köln (DE); Lin, Wanjiong, Ningbo City, Zhejiang 315103 (CN)
(72) Inventor: Wang, Ke, Ningbo, 315103 (CN)
(74) Representative: 2K Patentanwälte Blasberg Kewitz & Reichel

(57) **Abstract**

The invention relates to a control protection circuit, which comprises a driving control module having at least one output, a sampling amplification module provided on each output line for acquiring electrical information on the corresponding output line and amplify it for output; a comparison and judgment module connected to the sampling amplification module to receive the electrical information outputted by the sampling amplification module, and compare the electrical information to determine if the current output line outputs an abnormality, and outputs the corresponding judgment signal; a switching control module connected with the comparison and judgment module and the driving control module respectively, and conducts on or off according to the judgment signal of the comparison and judgment module, to control whether the driving control module works or not. The circuit is simple in structure and wide in application range, and safety and stability of the circuit are improved.

## Description

### RELATED APPLICATION

This application claims priority to a Chinese Patent Application No. CN 202111306922.1, filed on November 5, 2021.

### FIELD OF THE TECHNOLOGY

The invention relates to the technical field of power electronics, in particular to a control protection circuit.

### BACKGROUND

Compared with traditional lighting fixtures, LED lighting fixtures are more and more applied to household cabinets, wardrobes, mirror cabinets and other households due to their advantages of diverse shapes, high efficiency and energy saving, and adjustable and controllable color temperature and brightness. Accordingly, a variety of LED lighting control circuits have appeared. At present, two-wire cold and warm color temperature adjustable lamps are mainly used in the market. The main reason is that the brightness and color temperature of the lamps can be adjusted by inputting only two wires, which is convenient for installation and low cost.

However, no matter what type of lighting circuit, there is more or less the problem of insufficient overload or short circuit protection, especially for two-wire cold and warm color temperature adjustable lamps. This kind of two-wire cold and warm color temperature control circuit generally adopts four bridge MOS tubes to obtain the corresponding brightness and color temperature through certain switching timing, which makes the circuit alternating positive and negative currents. However, the existing circuit design cannot collect the overload voltage difference when the circuit carries negative current. If you want to achieve data acquisition, the configured control protection circuit will be very complex and difficult to achieve, which leads to overload and short circuit protection of such circuits become empty.

### BRIEF SUMMARY THE TECHNOLOGY

In view of the above problems, the purpose of the present invention is to provide a control protection circuit that can effectively provide overload and short circuit protection and improve circuit safety.

In order to achieve the above purpose, the technical solution of the present invention is: a control protection circuit comprising a driving control module having at least one output, it further includes:
a sampling amplification module, which is provided on each output line for acquiring electrical information on the corresponding output line and amplify it for output;
a comparison and judgment module, which is connected to the sampling amplification module to receive the electrical information outputted by the sampling amplification module, and compare the electrical information to determine if the current output line outputs an abnormality, and outputs the corresponding judgment signal;
a switching control module, which is connected with the comparison and judgment module and the driving control module respectively, and conducts on or off according to the judgment signal of the comparison and judgment module, so as to control whether the driving control module works or not.
the sampling amplification module includes a differential proportional amplifier that collects and amplifies the current on the corresponding output line, and a bias circuit that is connected to the differential proportional amplifier and provides it with an in-phase bias voltage.
the comparison and judgment module includes a window comparator and a first operational amplifier, and the output end of the differential proportional amplifier is connected to the inverting end of the upper comparator in the window comparator and the in-phase end of the lower comparator, respectively;
the upper comparator corresponds to a low threshold voltage and the lower comparator corresponds to a high threshold voltage, and the in-phase end of the first operational amplifier is connected to the output end of the window comparator, while the inverting end is connected to the negative power supply.
the switching control module includes a switch part that is connected to the output end of the first operational amplifier and is turned on or off according to the output level signal of the first operational amplifier, and the switch part is connected to the driving control module.
the circuit includes an oscillation module that can control the driving control module to automatically recover from the shutdown state to the working state after the output abnormality is eliminated.
the oscillation module includes a capacitor connected between the in-phase end and the output end of the first operational amplifier and a drain resistor connected between the in-phase end of the first operational amplifier and the negative power supply.
the circuit includes a total protection module, which is used to collect the electrical information on the total output line of the driving control module and judge whether it is abnormal to control whether the driving control module works or not.
the total protection module includes the first operational amplifier, the switching control module, and the second operational amplifier, which compares the electrical information collected on the total output line and outputs high and low level signals;
the output end of the second operational amplifier is connected to the in-phase end of the first operational amplifier and the inverting end is connected to the negative power supply.
the switch part is a MOS tube or a triode.
at least one output line and the total output line are respectively provided with a first sampling resistor and a second sampling resistor, and the electrical information corresponds to voltage difference on the sampling resistor.
the driving control module is a two-wire cold and warm color temperature control circuit, and the switch part has two and both are turned on or off synchronously.
an anomaly comprises overload or short circuit.

Compared with the prior art, the advantages of the present invention are:

The sampling amplification module, the comparison and judgment module, the switching control module are respectively configured for the corresponding single-channel output line, so that the driving control module can be controlled through the abnormal judgment of a single channel, thereby improving the safety and stability of the overall line; the comparison and judgment module uses a window comparator can subtly overcome the problems that the existing two-wire color temperature control circuit cannot realize sampling or the safety protection mechanism is complicated and difficult to implement when it carries negative current, which simplifies the circuit design and reduces the production cost; On the basis of separately configuring the safety protection mechanism for the lines, the safety protection control mechanism is configured on the total output line, which further improves the safety of the overall circuit; and the design of the oscillation module improves the intelligence of the overall circuit.

### BRIEF DESCRIPTION OF THE DRAWINGS

FIG.1 is an overall structural block diagram of a control protection circuit of the present application.
FIG.2 is a circuit schematic diagram of a driving control module in a control protection circuit of the present application.
FIG.3 is a schematic diagram corresponding to the partial structures of the sampling amplification module and the comparison and judgment module in a control protection circuit of the present application.
FIG.4 is a schematic diagram of a partial structure of a comparison and judgment module in a control protection circuit and a corresponding schematic diagram of a switching control module and the like.

### DETAILED DESCRIPTION OF THE INVENTION

The following describes in detail the embodiments of the present invention, examples of which are illustrated in the accompanying drawings, wherein the same or similar reference numerals refer to the same or similar elements or elements having the same or similar functions throughout. The embodiments described below with reference to the accompanying drawings are exemplary, only used to explain the present invention, and should not be construed as a limitation of the present invention.

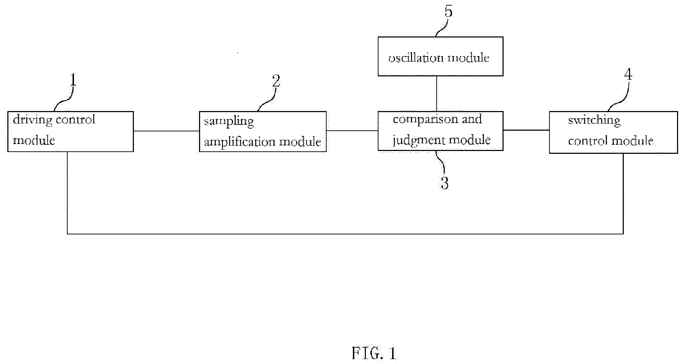

FIG.1 to 4 are schematic structural diagrams of a preferred embodiment of the present invention. The control protection circuit includes a driving control module 1 with at least one output, and also includes a sampling amplification module 2, a comparison and judgment module 3 and a switching control module 4, wherein the sampling amplification module 2 is provided on each output line, it is used to collect the electrical information on the corresponding output line and amplify it for output. The comparison and judgment module 3 is connected to the corresponding sampling amplification module 2 to receive the electrical information output by the sampling amplification module 2, and the electrical information is compared to determine whether the current output line is abnormal, so as to output the corresponding judgment signal. The switching control module 4 is connected with the comparison and judgment module 3 and the driving control module 1 respectively, and conducts on or off according to the judgment signal of the comparison and judgment module 3, so as to control whether the driving control module 1 works or not.

The control and protection circuit can be applied to multi-line multi-output, single-line multi-output, multi-line single-output, single-line single-output and other situations. Single-line multi-output means that there is only one color temperature control corresponds to the load with multiple channels. The single-line single-channel output corresponds to a color temperature control and the load has one channel. Multi-line single-output corresponds to a variety of color temperature control but the load has only one channel. Multi-line multi-output corresponds to a variety of color temperature controls and the load output also has multiple channels. For example, the two-line cold and warm color temperature control circuit mentioned in the background art is a multi-line multi-output situation.

The specific adaptation structure is that each output line is equipped with a sampling amplification module, a comparison and judgment module and a switching control module, or each output line can be respectively equipped with a sampling amplification module and a comparison and judgment module, and the switching control module is set to be shared by all output lines. At this time, the Boolean logic operator of "or" needs to be used inside the switching control module to realize that when one or more outputs are abnormal, the driving control module can stop working. Since this needs to be arranged according to the specific line layout, and it is not the focus of this application for protection, and it is easy to think of after adopting the corresponding circuit structure of this application, so it will not be described in detail here.

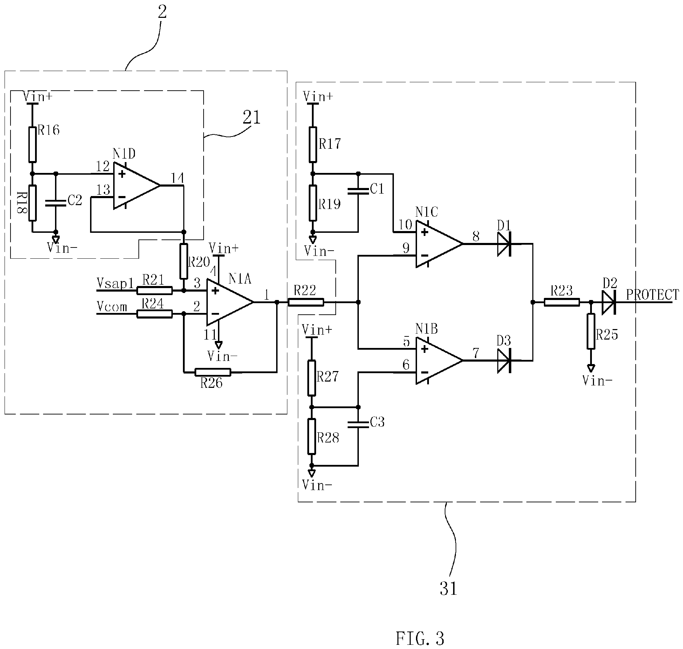

As shown in FIG.3, the sampling amplification module 2 includes a differential proportional amplifier N1A that collects and amplifies the current on the corresponding output line, and a bias circuit 21 that is connected to the differential proportional amplifier N1A and provides it with an in-phase bias voltage.

The comparison and judgment module 3 includes a window comparator 31 and a first operational amplifier N2B. The output end 1 of the differential proportional amplifier N1A is connected to the inverting end 9 of the upper comparator N1C in the window comparator 31 and the in-phase end 6 of the lower comparator N1B, respectively. The upper comparator N1C corresponds to a low threshold voltage and the lower comparator N1B corresponds to a high threshold voltage. The in-phase end 5 of the first operational amplifier N2B is connected to PROTECT, the output end of the window comparator, while the inverting end is connected to VIN-, the negative power supply.

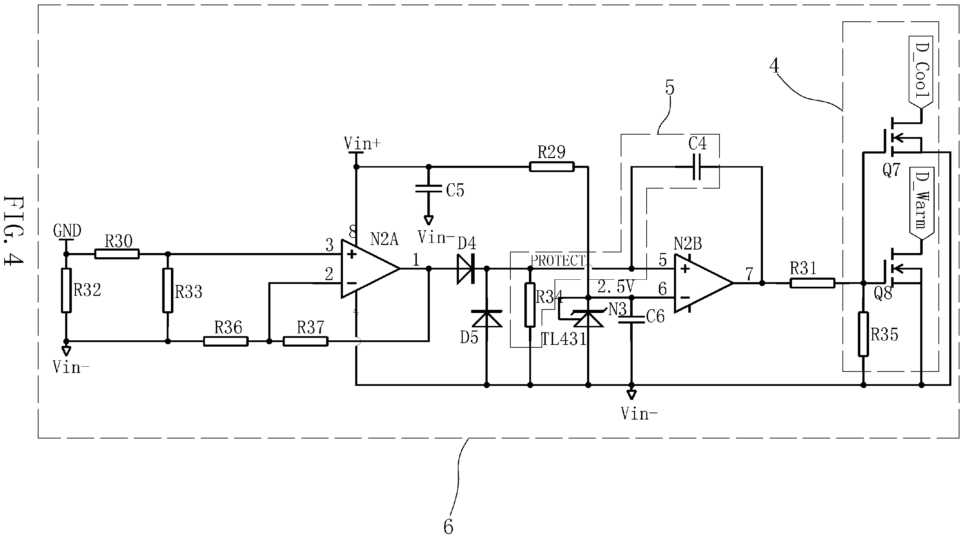

The switching control module 4 includes a switch part 41 that is connected to the output end 7 of the first operational amplifier N2B and is turned on or off according to the output level signal of the first operational amplifier N2B. The switch part 41 is connected to the driving control module 1 to control whether the driving control module works or not through its own turn-on and turn-off. The switch part can be MOS tube or triode, which can be selected according to actual needs, as shown in FIG.3 and FIG.4.

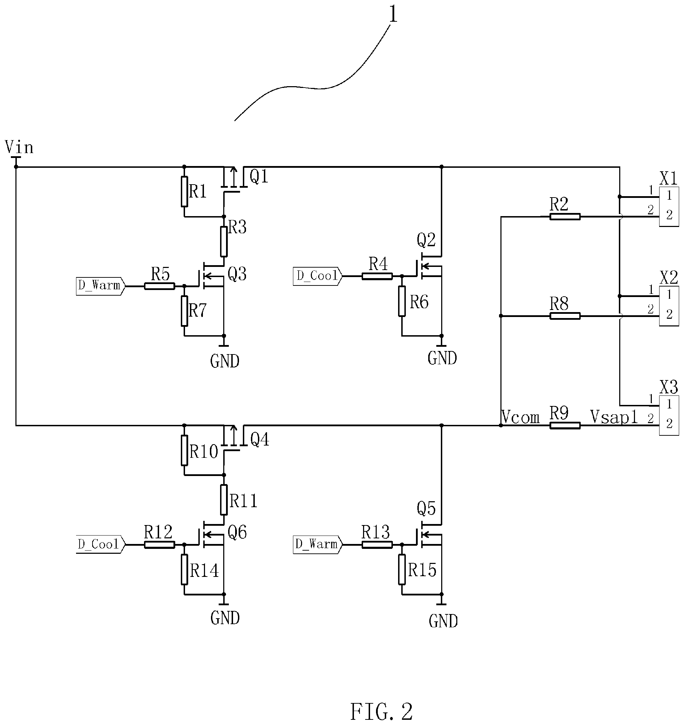

In order to collect the electrical information on each output line, a sampling resistor is set on each output line, which is named as a first sampling resistor here, and the electrical information on each output line is the voltage difference on the corresponding first sampling resistor. The embodiment of the present application takes the two-wire cold and warm color temperature control circuit as an example, as shown in FIG. 2. In this way, the switch part has two and both are turned on or off synchronously, that is, both are N-channel enhanced MOS tube Q7/Q8.

According to the safety regulations, if the limited current on each output line is 3A, the resistance value of the first sampling resistor R9/R8/R2 is 5mΩ (the reason for this value is mainly to reduce the loss), the value of the amplification factor β of the differential proportional amplifier N1A is R26/R24, assuming β as 60, In this case, the voltage after amplification is u=3*0.005*60=0.9V, because the bias circuit 21 provides in-phase bias voltage, while R16=R189, the high threshold voltage of the window comparator 31 is 1/2 VIN +0.9V, and the low threshold voltage is 1/2 VIN-0.9V.

The differential proportional amplifier N1A and the window comparator take the voltage difference as the comparison object, and have nothing to do with the current direction. In this way, In this way, the existing two-line cold and warm color temperature control circuit cannot be sampled when the circuit current is negative, which leads to the difficulty of abnormal judgment or the complex and difficult to realize the sampling control circuit.

When the current on the corresponding output line is less than 3A, the output end PROTECT of the window comparator 31 outputs a low level, and the output of the first operational amplifier N2B also outputs a low level at this time, and Q7 and Q8 are not turned on, then the driving control module outputs normally. When the current is greater than 3A, that is, the line circuit is overloaded or short-circuited, the window comparator 31 will output a high level, and N2B will also output a high level at this time, correspondingly, Q7, Q8 conducts immediately, the driving control module 1 is pulled low to make it stop working, so as to play the role of overload/short circuit protection. obviously, the judgment signal output by the comparison and judgment module 3 composed of the window comparator 31 and the first operational amplifier N2B is the high and low level signal. and in this embodiment, when the current output circuit is normal, the judgment signal is a low level signal, and when the current output line output is abnormal, the judgment signal is a high level signal, and when the current output circuit is abnormally output, the judgment signal corresponds to a high-level signal.

In order to realize that the circuit can automatically resume normal operation after the abnormality on the output line is eliminated, see FIG. 4. the circuit of the present application also includes an oscillation module 5 that can control the driving control module 1 to automatically recover from the shutdown state to the working state after the output abnormality is eliminated. The oscillation module 5 includes a capacitor C4 connected between the in-phase end 5 and the output end 7 of the first operational amplifier N2B and a drain resistor R34 connected between the in-phase end 5 of the first operational amplifier N2B and the negative power supply VIN-.

When the output is normal, C4 is in a charged state and remains stable. When there is an overload or short circuit anomaly, the voltage of the in-phase end of N2B will be higher than the reference voltage of the inverting end, so that Q7 and Q8 are turned on, and the driving control module 1 is pulled down and turned off, and the circuit power is cut off. C4 will discharge through R34 at this time. When the voltage of C4 is released to the in-phase end of N2B is lower than the reference voltage of the inverting end, N2B will output a low level to turn off Q7 and Q8, thus making the driving control module 1 turn on again and resume normal work. In this way, the coordination of C4 and R34 can make the output of N2B "hiccup", that is, in the overload/short circuit protection, the drive control module will be turned on at intervals. If overload or short circuit is still detected at this time, it will continue to protect. If overload or short circuit is revoked, the line will automatically return to normal.

In order to better protect the circuit, the circuit of the present application also includes a total protection module 6, which is used to collect the electrical information on the total output line of the driving control module 1 and judge whether it is abnormal to control whether the driving control module 1 works or not. The total protection module 6 includes the first operational amplifier N2B, the switching control module 4 and the second operational amplifier N2A, which compares the electrical information collected on the total output line and outputs high and low level signals. The output end 1 of the second operational amplifier N2A is connected to the in-phase end 5 of the first operational amplifier N2B and the inverting end 2 is connected to the negative power supply VIN-. Similarly, the electrical information on the total output line is obtained by setting the sampling resistor on the total output line, named as the second sampling resistor R32 here, and obtaining the voltage difference on the R32, as shown in FIG.4.

When there is an overload or short circuit on the total output line, the voltage difference on R32 will be greater than the reference voltage on the inverting end of N2A, so that N2A outputs a high level, which in turn will make N2B output a high level, thus the Q7 and Q8 are turned on, and the driving control module 1 is pulled down for protection. Once the overload or short circuit is removed, the circuit will return to normal under the action of the oscillation module 5.

In this way, the present application can realize the control of the drive control module through the abnormal judgment of a single circuit, thereby improving the safety and stability of the overall circuit; The comparison judgment module adopts a window comparator, which can skillfully overcome the problem that the existing two-line color temperature control circuit cannot realize sampling or the safety protection mechanism is complicated and difficult to realize when carrying negative current, thereby simplifying the circuit design and reducing the production cost; On the basis of configuring the safety protection mechanism for the single output circuit separately, It can further improve the safety of the overall circuit by configuring the safety protection control mechanism on the total output line; The design of the oscillation module improves the intelligence of the whole circuit.

The above are only preferred embodiments of the present invention, and are not used to limit the protection scope of the present invention. Any modification, equivalent replacement or improvement within the spirit of the present invention is covered by the scope of the claims of the present invention.

## Claims

1. A control protection circuit comprising a driving control module (1) having at least one output, **characterized in that**, it further comprises:
a sampling amplification module (2), which is provided on each output line for acquiring electrical information on the corresponding output line and amplify it for output;
a comparison and judgment module (3), which is connected to the sampling amplification module (2) to receive the electrical information outputted by the sampling amplification module (2), and compare the electrical information to determine if the current output line outputs an abnormality, and outputs the corresponding judgment signal;
a switching control module (4), which is connected with the comparison and judgment module (3) and the driving control module (1) respectively, and conducts on or off according to the judgment signal of the comparison and judgment module (3), so as to control whether the driving control module (1) works or not.

2. The control protection circuit as claimed in claim 1, wherein the sampling amplification module (2) comprises a differential proportional amplifier (N1A) that collects and amplifies the current on the corresponding output line, and a bias circuit (21) that is connected to the differential proportional amplifier (N1A) and provides it with an in-phase bias voltage.

3. The control protection circuit as claimed in claim 2, wherein the comparison and judgment module (3) comprises a window comparator (31) and a first operational amplifier (N2B), and the output end of the differential proportional amplifier (N1A) is connected to the inverting end of the upper comparator (N1C) in the window comparator (31) and the in-phase end of the lower comparator (N1B), respectively;
the upper comparator (N1C) corresponds to a low threshold voltage and the lower comparator (N1B) corresponds to a high threshold voltage, and the in-phase end of the first operational amplifier (N2B) is connected to the output end (PROTECT) of the window comparator, while the inverting end is connected to the negative power supply (VIN-).

4. The control protection circuit as claimed in claim 3, wherein the switching control module (4) comprises a switch part that is connected to the output end of the first operational amplifier (N2B) and is turned on or off according to the output level signal of the first operational amplifier (N2B), and the switch part is connected to the driving control module (1).

5. The control protection circuit as claimed in claim 3, wherein the circuit comprises an oscillation module (5) that can control the driving control module (1) to automatically recover from the shutdown state to the working state after the output abnormality is eliminated.

6. The control protection circuit as claimed in claim 5, wherein the oscillation module (5) comprises a capacitor (C4) connected between the in-phase end and the output end of the first operational amplifier (N2B) and a drain resistor (R34) connected between the in-phase end of the first operational amplifier (N2B) and the negative power supply (VIN-).

7. The control protection circuit as claimed in claim 3, wherein the circuit comprises a total protection module (6), which is used to collect the electrical information on the total output line of the driving control module (1) and judge whether it is abnormal to control whether the driving control module (1) works or not.

8. The control protection circuit as claimed in claim 7, wherein the total protection module (6) comprises the first operational amplifier (N2B), the switching control module (4), and the second operational amplifier (N2A) , which compares the electrical information collected on the total output line and outputs high and low level signals;
the output end of the second operational amplifier (N2A) is connected to the in-phase end of the first operational amplifier (N2B) and the inverting end is connected to the negative power supply (VIN-).

9. The control protection circuit as claimed in claim 4, wherein the switch part is a MOS tube or a triode.

10. The control protection circuit as claimed in claim 7, wherein at least one output line and the total output line are respectively provided with a first sampling resistor and a second sampling resistor (R32), and the electrical information corresponds to voltage difference on the sampling resistor.

11. The control protection circuit as claimed in claim 4, wherein the driving control module (1) is a two-wire cold and warm color temperature control circuit, and the switch part has two and both are turned on or off synchronously.

12. The control protection circuit as claimed in claim 1, wherein an anomaly comprises overload or short circuit.
